# EUROPEAN PATENT SPECIFICATION

(11) **EP 4 660 820 B1**
(45) Date of publication and mention of the grant of the patent: **11.11.2026**
(21) Application number: 23934856.8
(22) Date of filing: 31.08.2023
(51) Int. Cl.: G06F 16/955, G06F 16/958

(54) **CLIENT-DOMINATED INFORMATION PUBLISHING SYSTEM**
SYSTEM ZUR VERÖFFENTLICHUNG VON CLIENT-DOMINIERTEN INFORMATIONEN
SYSTÈME DE PUBLICATION D'INFORMATIONS DOMINÉES PAR UN CLIENT

(30) Priority: 25.04.2023 CN 202310457367
(43) Date of publication of application: 10.12.2025
(73) Proprietor: Guangzhou Lango Electronic Technology Co., Ltd., Guangzhou, Guangdong 510663 (CN)
(72) Inventor: CHEN, Shu, Guangzhou, Guangdong 510663 (CN)
(74) Representative: Metida
(86) International application number: PCT/CN2023/116096
(87) International publication number: WO 2024/221687

(56) References cited:
- WO-A1-2023/273118
- CN-A- 102 420 855
- CN-A- 104 469 484
- CN-A- 110 399 332
- CN-A- 116 401 211
- KR-A- 20080 006 443
- US-A1- 2019 259 422

## Description

### TECHNICAL FIELD

The present disclosure relates to the technical field of information publishing, and in particular, to a client-dominated information publishing system.

### BACKGROUND

At present, the publishing and display of information mainly involve three entities: a client, a server, and a terminal. The client serves as a carrier for creating information content, the server is responsible for processing the information content, and the terminal functions to receive and play back the information content.

Currently, a mainstream information publishing method is as follows: The client creates the information content and sends the created information content to the server for data cleaning and processing. The server then packages processed data into a program package that can be played back by the terminal, and notifies, through signaling, the terminal to download the program package. Finally, the terminal plays back the content after downloading the program package. This information publishing method requires file duplication and relocation during the packaging by the server, resulting in an excessive time consumption for data collection and information content packaging when the server processes the information content. As a result, overall efficiency of information publishing is low. US2019259422A1 teaches a system for capturing, assembling, and displaying customized video content using digital image processing to produce videos of customizable items more efficiently.

### SUMMARY

The invention is defined by the features of the independent claims. Further embodiments are the subject-matter of the dependent claims.

The present disclosure provides a client-dominated information publishing system which shortens time consumed by a server in processing information content and solves a technical problem of how to improve overall efficiency of information publishing.

In order to solve the above technical problem, an embodiment of the present disclosure provides a client-dominated information publishing system, including a client, a server, and a terminal, where
the client is configured to: extract a required asset file from information content created by a user, and record corresponding information of the asset file; and request a static resource file required for information playback from the server, where the information of the asset file includes a position of the asset file in a content package;
the server is configured to scan a storage directory of the static resource file, and return information that is of the static resource file and corresponds to the asset file in the storage directory to the client;
the client is configured to: receive the information of the static resource file, including a position of the corresponding static resource file in the content package; generate content of a playback logic file based on the information content created by the user, and obtain information of the playback logic file, where the information of the playback logic file includes a position of the corresponding playback logic file in the content package; and summarize and submit the information of the asset file, the information of the static resource file, and the information of the playback logic file to the server;
the server is configured to generate a corresponding file based on a file type and the information of the playback logic file, store the corresponding file in a server-accessible directory, generate a corresponding access link, and send signaling to the terminal; and
the terminal is configured to: in response to the signaling, access the server through the access link to download the asset file, the static resource file, and the playback logic file, arrange and combine the asset file, the static resource file, and the playback logic file based on the positions of the asset file, the static resource file, and the playback logic file in the content package to create the content package, and execute information publishing by playing back the created content package.

As a preferred solution, a type of the static resource file includes a first script file, a style file, and a font file; and the first script file is preset.

As a preferred solution, a type of the playback logic file includes a Hypertext Markup Language (HTML) file and a second script file; and the second script file is generated by the server based on a file type and the information of the playback logic file.

As a preferred solution, the information of the asset file further includes a position of the asset file in the server and a type of the asset file.

As a preferred solution, the position of the asset file in the server is a link for accessing a file on the server.

As a preferred solution, the type of the asset file includes an image, a video, and a document.

As a preferred solution, the position of the asset file in the content package is generated by the client according to a preset rule.

Compared with the prior art, the embodiments of the present disclosure achieve following beneficial effects:
The embodiments of the present disclosure provide a client-dominated information publishing system, including a client, a server, and a terminal. The client is configured to extract a required asset file from information content created by a user, and record corresponding information of the asset file; and request a static resource file required for information playback from the server, where the information of the asset file includes a position of the asset file in a content package. The server is configured to scan a storage directory of the static resource file, and return information that is of the static resource file and corresponds to the asset file in the storage directory to the client. The client is configured to receive the information of the static resource file, where the information of the static resource file includes a position of the corresponding static resource file in the content package; generate content of a playback logic file based on the information content created by the user; obtain information of the playback logic file, where the information of the playback logic file includes a position of the corresponding playback logic file in the content package; and summarize and submit the information of the asset file, the information of the static resource file, and the information of the playback logic file to the server. The server is configured to generate a corresponding file based on a file type and the information of the playback logic file, store the corresponding file in a server-accessible directory, generate a corresponding access link, and send signaling to the terminal. The terminal is configured to: in response to the signaling, access the server through the access link to download the asset file, the static resource file, and the playback logic file, arrange and combine the asset file, the static resource file, and the playback logic file based on the positions of the asset file, the static resource file, and the playback logic file in the content package to create the content package, and execute information publishing by playing back the created content package. The server in the present disclosure only performs data transfer, and data information required for the content package is integrated on the client, thereby reducing a demand for using the server. The terminal can access the server and download the asset file, the static resource file, and the playback logic file separately, thereby saving time required for the server to collect data and package the information content, and improving efficiency of the information publishing. In addition, after logic of the server is modified, only the content of the playback logic file needs to be regenerated without a need for restarting the server.

### BRIEF DESCRIPTION OF THE DRAWINGS

FIG. 1 is a schematic structural diagram of a client-dominated information publishing system according to an embodiment of the present disclosure; and
FIG. 2 is a schematic diagram of an execution process of a client-dominated information publishing system according to an embodiment of the present disclosure.

### DETAILED DESCRIPTION

The technical solutions in the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

### Embodiment 1

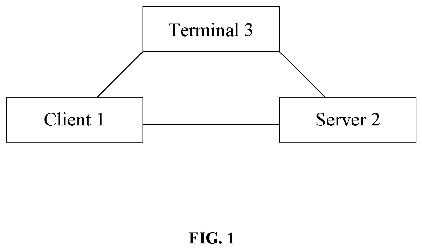

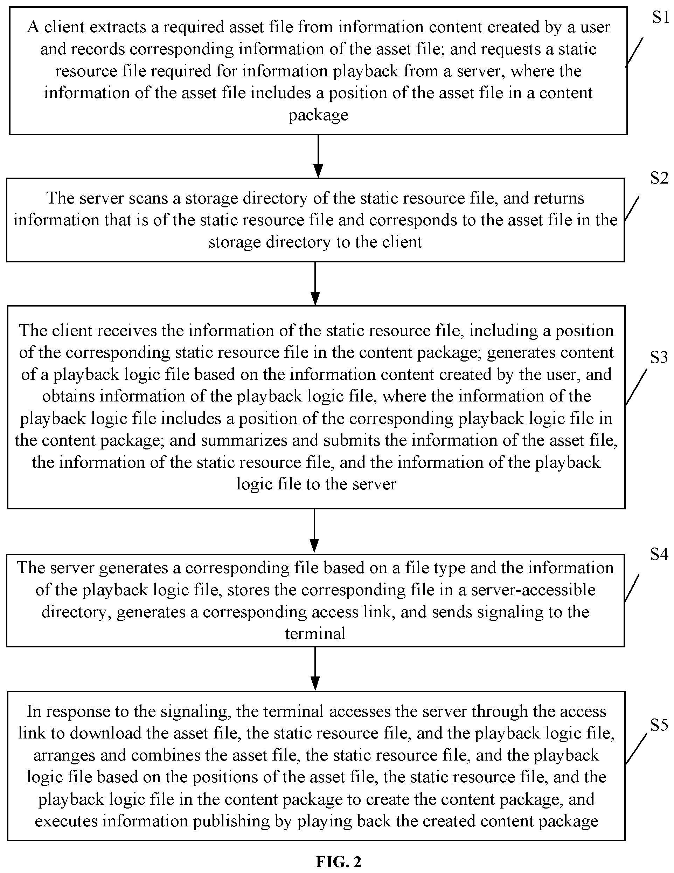

Referring to FIG. 1 and FIG. 2, FIG. 1 shows a client-dominated information publishing system, including a client 1, a server, 2 and a terminal 3.

Firstly, some basic concepts or elements involved in the embodiments of the present disclosure are briefly described as follows:
(1) An asset file required for information publishing/playback includes but is not limited to an image, a video, a document, and the like.
(2) A static resource file (also known as a dependency file) required for the information playback includes but is not limited to a first script file, a style file, a font file, and the like.
(3) A logic file for the information playback (namely, a playback logic file) mainly includes an HTML file and a second script file.

Different from the second script file, the first script file is preset and pre-stored in either the client 1 or the server 2. The second script file is generated by the server 2 based on a file type and information of the playback logic file.

An execution process of the information publishing system dominated by the client 1 provided in this embodiment is shown in FIG. 2, specifically including the following steps:
Step S1: Firstly, a user creates information content on the client 1.

Then, the client 1 extracts a required asset file from the information content created by the user and records corresponding information of the asset file. The information of the asset file herein includes a position of the asset file in a content package, a position of the asset file in the server 2, and a type of the asset file. Specifically, the position of the asset file in the content package is generated by the client 1 according to a preset rule. The position of the asset file in the server 2 may be a link for accessing a file on the server 2.

Subsequently, a static resource file required for information playback is requested from the server 2.

Step S2: The server 2 scans a storage directory of the static resource file, and returns information that is of the static resource file and corresponds to the asset file in the storage directory to the client 1, where the static resource file herein, namely the static resource file required for the information playback, is also referred to as a "dependency file", and a type of the static resource file includes a first script file, a style file, a font file, and the like.

Step S3: The client 1 receives and records the information of the static resource file, where the information of the static resource file includes a position of the corresponding static resource file in the content package.

In addition, the client 1 generates content of a playback logic file based on the information content created by the user, and obtains information of a playback logic file, where the information of the playback logic file includes a position of the corresponding playback logic file in the content package.

After collecting the information of the asset file, the information of the static resource file, and the information of the playback logic file, the client 1 summarizes and submits the above information to the server 2.

Step S4: The server 2 generates a corresponding file based on a file type (a second script file or an HTML file) and file content in the information of the playback logic file, stores the file in a directory accessible to the server 2, generates a corresponding access link, and then sends signaling to the terminal 3.

Step S5: The terminal 3 receives and responds to the signaling, accesses the server 2 through the access link in the signaling to download the asset file, the static resource file, and the playback logic file, arranges and combines the asset file, the static resource file, and the playback logic file based on an agreed rule and the positions of the asset file, the static resource file, and the playback logic file in the content package to create an information content package, and executes information publishing by playing back the created information content package.

In addition, it should be noted that the prior art needs to debug the server 2, the client 1, and the terminal 3 when fixing some playback problems or adding some new features for content to be played back. In this case, technical personnel of all the server 2, the client 1, and the terminal 3 need to cooperate with each other. However, based on the information publishing system in this embodiment, it is only necessary to perform edition or modification on the client 1. The client 1 plays a dominated role in executing a corresponding information publishing method of the information publishing system, without a need for debugging the server 2 and the terminal 3.

In addition, after logic (or the static resource file) of the server 2 is modified, this embodiment does not need to restart the server 2 to make a code effective. Instead, the information of the logic file is changed, a corresponding playback logic file is regenerated, a corresponding access link is generated, and signaling is sent to the terminal 3 for downloading and reassembling the content package. Therefore, according to the information publishing system in this embodiment, the server 2 does not need to perform packaging, which can reduce a performance consumption of the server 2. In addition, the server 2 mainly serves as a data relay, and all data information of the content package is integrated on the client 1, thereby reducing a correlation between the information publishing and the server. The client 1 can cope with most of demands, effectively improving overall efficiency of the information publishing and reducing resources consumed for the information publishing.

Compared with the prior art, the embodiments of the present disclosure achieve following beneficial effects:
The embodiments of the present disclosure provide a client-dominated information publishing system, including a client, a server, and a terminal. The client is configured to extract a required asset file from information content created by a user, and record corresponding information of the asset file; and request a static resource file required for information playback from the server, where the information of the asset file includes a position of the asset file in a content package. The server is configured to scan a storage directory of the static resource file, and return information that is of the static resource file and corresponds to the asset file in the storage directory to the client. The client is configured to receive the information of the static resource file, where the information of the static resource file includes a position of the corresponding static resource file in the content package; generate content of a playback logic file based on the information content created by the user; obtain information of the playback logic file, where the information of the playback logic file includes a position of the corresponding playback logic file in the content package; and summarize and submit the information of the asset file, the information of the static resource file, and the information of the playback logic file to the server. The server is configured to generate a corresponding file based on a file type and the information of the playback logic file, store the corresponding file in a server-accessible directory, generate a corresponding access link, and send signaling to the terminal. The terminal is configured to: in response to the signaling, access the server through the access link to download the asset file, the static resource file, and the playback logic file, arrange and combine the asset file, the static resource file, and the playback logic file based on the positions of the asset file, the static resource file, and the playback logic file in the content package to create the content package, and execute information publishing by playing back the created content package. The server in the present disclosure only performs data transfer, and data information required for the content package is integrated on the client, thereby reducing a demand for using the server. The terminal can access the server and download the asset file, the static resource file, and the playback logic file separately, thereby saving time required for the server to collect data and package the information content, and improving efficiency of the information publishing. In addition, after logic of the server is modified, only the content of the logic file needs to be regenerated without a need for restarting the server.

The objectives, technical solutions, and beneficial effects of the present disclosure are further described in detail through the above specific embodiments. It should be understood that the above are merely some specific embodiments of the present disclosure, but are not intended to limit the protection scope of the present disclosure, which is defined by the appended claims.

## Claims

1. A client-dominated information publishing system, comprising a client (1), a server (2), and a terminal (3),
wherein the client is configured to: extract (S1) a required asset file from information content created by a user, and record corresponding information of the asset file; and request a static resource file required for information playback from the server, wherein the information of the asset file comprises a position of the asset file in a content package;
the server is configured to scan (S2) a storage directory of the static resource file, and return information that is of the static resource file and corresponds to the asset file in the storage directory to the client;
the client is configured to: receive (S3) the information of the static resource file, comprising a position of the corresponding static resource file in the content package; generate content of a playback logic file based on the information content created by the user, and obtain information of the playback logic file, wherein the information of the playback logic file comprises a position of the corresponding playback logic file in the content package; and summarize and submit the information of the asset file, the information of the static resource file, and the information of the playback logic file to the server;
the server is configured to generate (S4) a corresponding file based on a file type and the information of the playback logic file, store the corresponding file in a server-accessible directory, generate a corresponding access link, and send signaling to the terminal; and
the terminal is configured to: in response to the signaling, access (S5) the server through the access link to download the asset file, the static resource file, and the playback logic file, arrange and combine the asset file, the static resource file, and the playback logic file based on the positions of the asset file, the static resource file, and the playback logic file in the content package to create the content package, and execute information publishing by playing back the created content package.

2. The client-dominated information publishing system according to claim 1, wherein a type of the static resource file comprises a first script file, a style file, and a font file; and the first script file is preset.

3. The client-dominated information publishing system according to claim 2, wherein a type of the playback logic file comprises a Hypertext Markup Language (HTML) file and a second script file; and the second script file is generated by the server based on a file type and the information of the playback logic file.

4. The client-dominated information publishing system according to claim 3, wherein the information of the asset file further comprises a position of the asset file in the server and a type of the asset file.

5. The client-dominated information publishing system according to claim 4, wherein the type of the asset file comprises an image, a video, and a document.

6. The client-dominated information publishing system according to claim 4, wherein the position of the asset file in the server is a link for accessing a file on the server.

7. The client-dominated information publishing system according to claim 4, wherein the position of the asset file in the content package is generated by the client according to a preset rule.

## Patentansprüche

1. Ein System zur Veröffentlichung von Client-dominierten Informationen, umfassend einen Client (1), einen Server (2) und ein Endgerät (3),
wobei
der Client konfiguriert ist zum: Extrahieren (S1) einer erforderlichen Asset-Datei aus von einem Benutzer erstellten Informationsinhalten und Aufzeichnen entsprechender Informationen der Asset-Datei; und Anfordern einer für die Informationswiedergabe erforderlichen statischen Ressourcendatei vom Server, wobei die Informationen der Asset-Datei eine Position der Asset-Datei in einem Inhaltspaket umfassen;
der Server konfiguriert ist zum: Scannen (S2) eines Speicherverzeichnisses der statischen Ressourcendatei und Zurückgeben von Informationen, die von der statischen Ressourcendatei stammen und der Asset-Datei in dem Speicherverzeichnis entsprechen, an den Client;
der Client konfiguriert ist zum: Empfangen (S3) der Informationen der statischen Ressourcendatei, umfassend eine Position der entsprechenden statischen Ressourcendatei in dem Inhaltspaket; Generieren von Inhalten einer Wiedergabelogikdatei basierend auf den vom Benutzer erstellten Informationsinhalten und Abrufen von Informationen der Wiedergabelogikdatei, wobei die Informationen der Wiedergabelogikdatei eine Position der entsprechenden Wiedergabelogikdatei in dem Inhaltspaket umfassen; und Zusammenfassen und Übermitteln der Informationen der Asset-Datei, der Informationen der statischen Ressourcendatei und der Informationen der Wiedergabelogikdatei an den Server;
der Server konfiguriert ist zum: Generieren (S4) einer entsprechenden Datei basierend auf einem Dateityp und den Informationen der Wiedergabelogikdatei, Speichern der entsprechenden Datei in einem für den Server zugänglichen Verzeichnis, Generieren eines entsprechenden Zugriffslinks und Senden einer Signalisierung an das Endgerät; und
das Endgerät konfiguriert ist zum: in Reaktion auf die Signalisierung, Zugreifen (S5) auf den Server über den Zugriffslink, um die Asset-Datei, die statische Ressourcendatei und die Wiedergabelogikdatei herunterzuladen, Anordnen und Kombinieren der Asset-Datei, der statischen Ressourcendatei und der Wiedergabelogikdatei basierend auf den Positionen der Asset-Datei, der statischen Ressourcendatei und der Wiedergabelogikdatei in dem Inhaltspaket, um das Inhaltspaket zu erstellen, und Ausführen der Informationsveröffentlichung durch Wiedergeben des erstellten Inhaltspakets.

2. Das System zur Veröffentlichung von Client-dominierten Informationen nach Anspruch 1, wobei ein Typ der statischen Ressourcendatei eine erste Skriptdatei, eine Stildatei und eine Schriftartdatei umfasst; und die erste Skriptdatei voreingestellt ist.

3. Das System zur Veröffentlichung von Client-dominierten Informationen nach Anspruch 2, wobei ein Typ der Wiedergabelogikdatei eine HTML-Datei (Hypertext Markup Language) und eine zweite Skriptdatei umfasst; und die zweite Skriptdatei durch den Server basierend auf einem Dateityp und den Informationen der Wiedergabelogikdatei generiert wird.

4. Das System zur Veröffentlichung von Client-dominierten Informationen nach Anspruch 3, wobei die Informationen der Asset-Datei ferner eine Position der Asset-Datei im Server und einen Typ der Asset-Datei umfassen.

5. Das System zur Veröffentlichung von Client-dominierten Informationen nach Anspruch 4, wobei der Typ der Asset-Datei ein Bild, ein Video und ein Dokument umfasst.

6. Das System zur Veröffentlichung von Client-dominierten Informationen nach Anspruch 4, wobei die Position der Asset-Datei im Server ein Link zum Zugreifen auf eine Datei auf dem Server ist.

7. Das System zur Veröffentlichung von Client-dominierten Informationen nach Anspruch 4, wobei die Position der Asset-Datei in dem Inhaltspaket durch den Client gemäß einer voreingestellten Regel generiert wird.

## Revendications

1. Un système de publication d'informations dominées par un client, comprenant un client (1), un serveur (2) et un terminal (3),
dans lequel
le client est configuré pour: extraire (S1) un fichier d'actifs requis à partir d'un contenu d'informations créé par un utilisateur, et enregistrer des informations correspondantes du fichier d'actifs; et demander au serveur un fichier de ressources statiques requis pour la lecture des informations, dans lequel les informations du fichier d'actifs comprennent une position du fichier d'actifs dans un paquet de contenu;
le serveur est configuré pour: analyser (S2) un répertoire de stockage du fichier de ressources statiques, et renvoyer au client des informations qui sont celles du fichier de ressources statiques et qui correspondent au fichier d'actifs dans le répertoire de stockage;
le client est configuré pour: recevoir (S3) les informations du fichier de ressources statiques, comprenant une position du fichier de ressources statiques correspondant dans le paquet de contenu; générer le contenu d'un fichier de logique de lecture basé sur le contenu d'informations créé par l'utilisateur, et obtenir des informations du fichier de logique de lecture, dans lequel les informations du fichier de logique de lecture comprennent une position du fichier de logique de lecture correspondant dans le paquet de contenu; et résumer et soumettre au serveur les informations du fichier d'actifs, les informations du fichier de ressources statiques et les informations du fichier de logique de lecture;
le serveur est configuré pour: générer (S4) un fichier correspondant basé sur un type de fichier et les informations du fichier de logique de lecture, stocker le fichier correspondant dans un répertoire accessible par le serveur, générer un lien d'accès correspondant, et envoyer une signalisation au terminal; et
le terminal est configuré pour: en réponse à la signalisation, accéder (S5) au serveur par l'intermédiaire du lien d'accès pour télécharger le fichier d'actifs, le fichier de ressources statiques et le fichier de logique de lecture, agencer et combiner le fichier d'actifs, le fichier de ressources statiques et le fichier de logique de lecture sur la base des positions du fichier d'actifs, du fichier de ressources statiques et du fichier de logique de lecture dans le paquet de contenu pour créer le paquet de contenu, et exécuter la publication d'informations en lisant le paquet de contenu créé.

2. Le système de publication d'informations dominées par un client selon la revendication 1, dans lequel un type du fichier de ressources statiques comprend un premier fichier de script, un fichier de style et un fichier de police; et le premier fichier de script est prédéfini.

3. Le système de publication d'informations dominées par un client selon la revendication 2, dans lequel un type du fichier de logique de lecture comprend un fichier en langage de balisage hypertexte (HTML) et un second fichier de script; et le second fichier de script est généré par le serveur sur la base d'un type de fichier et des informations du fichier de logique de lecture.

4. Le système de publication d'informations dominées par un client selon la revendication 3, dans lequel les informations du fichier d'actifs comprennent en outre une position du fichier d'actifs dans le serveur et un type du fichier d'actifs.

5. Le système de publication d'informations dominées par un client selon la revendication 4, dans lequel le type du fichier d'actifs comprend une image, une vidéo et un document.

6. Le système de publication d'informations dominées par un client selon la revendication 4, dans lequel la position du fichier d'actifs dans le serveur est un lien pour accéder à un fichier sur le serveur.

7. Le système de publication d'informations dominées par un client selon la revendication 4, dans lequel la position du fichier d'actifs dans le paquet de contenu est générée par le client selon une règle prédéfinie.
